# EUROPÄISCHE PATENTSCHRIFT

(11) **EP 0 667 547 B1**
(45) Veröffentlichungstag und Bekanntmachung des Hinweises auf die Patenterteilung: **12.08.1998**
(21) Anmeldenummer: 95101187.3
(22) Anmeldetag: 28.01.1995
(51) Int. Cl.: G02B 23/24, A61B 1/00

(54) **Stereo-Endoskop**
Stereoscopic endoscope
Endoscope stéréoscopique

(30) Priorität: 12.02.1994 DE 9402336 U
(43) Veröffentlichungstag der Anmeldung: 16.08.1995
(73) Patentinhaber: Richard Wolf GmbH, 75438 Knittlingen (DE)
(72) Erfinder: Zobel, Jürgen, D-75015 Bretten (DE); Boebel, Manfred, D-75443 Oetisheim (DE)
(74) Vertreter: Vollmann, Heiko, Dipl.-Ing.

(56) Entgegenhaltungen:
- DE-A- 3 818 104
- DE-A- 4 225 507
- US-A- 4 061 135

## Beschreibung

Die Erfindung betrifft ein Stereo-Endoskop gemäß dem Oberbegriff des Anspruches 1.

Ein derartiges Stereo-Endoskop ist in der DE 38 18 104 A1 beschrieben. Bei diesem Endoskop ist jedem optischen System des Endoskopschaftes proximalseitig ein erstes Umlenkprisma und ein diesem nachgeordnetes zweites Umlenkprisma zugeordnet, wobei das zweite Umlenkprisma die optische Achse wieder parallel in Richtung des Einblickes in das Endoskop ausrichtet. Das Endoskop kann für direkten Einblick und über eine daran anschließbare Steuereinheit in Verbindung mit einem Monitor verwendet werden. Des weiteren ist das Endoskop auch so ausgebildet, daß eine Lichtquelle wechselweise an das eine oder andere optische System des Endoskopschaftes angeschlossen werden kann, so daß das Endoskop in diesem Fall auch für Mono-Betrachtungsweise verwendbar ist. Diesem vorbekannten Endoskop ist nicht entnehmbar, ob und wie die Umlenkprismen eingestellt werden.

In der US-Patentschrift 4 061 135 ist ein weiteres Stereo-Endoskop für den Direkteinblick erläutert, bei dem ebenfalls jedem optischen System des Endoskopschaftes Umlenkprismen nachgeordnet sind, denen sich wiederum Okulareinheiten anschließen. Die Umlenkprismen sind feststehend an einem Halterungsaufbau montiert, der wiederum an einer Wand eines das stereooptische System aufnehmenden Gehäuses befestigt ist. Auch in diesem Fall ist nicht dargestellt, wie eine Justierung des stereooptischen Systemes erfolgen kann.

Die Aufgabe der Erfindung besteht in der Verbesserung eines Stereo-Endoskopes der einleitend angeführten Art, das mit einer kompakten Konstruktion eine einfache Justierung insbesondere der optischen Teile der proximalen stereooptischen Einrichtung ermöglicht, eine verbessere Bildübertragung beim Einblick in das Endoskop bietet und sowohl für den direkten Einblick als auch für die Betrachtung mittels weiterer Hilfsinstrumente geeignet ist.

Die Lösung dieser Aufgabe ist in dem Anspruch 1 angegeben. Bevorzugte Ausführungsformen sind in den Unteransprüchen angeführt.

Durch diese Lösung ist ein kompakter Halterungsaufbau für die proximalseitig vorgesehene stereoskopische Einrichtung des Endoskopes geschaffen, der auf einfache Weise unter optischer Kontrolle eine Justierung sowohl der zweiten Umlenkprismen als auch der Feldblenden ermöglicht. Die zweiten Umlenkprismen können in mehreren Freiheitsgraden eingestellt werden. Die zweiten Umlenkprismen können dadurch sowohl zu den ersten Umlenkprismen als auch in Endoskop-Einblickrichtung optimal justiert werden. Unabhängig davon können auch die Feldblenden insbesondere relativ zu den optischen Systemen in dem Endoskopschaft eingestellt werden, nämlich im wesentlichen innerhalb einer Ebene, die parallel zu den Einblick Einblick-Eintrittsflächen der genannten optischen Systeme verläuft. Hierzu können die die Feldblenden tragenden weiteren Halteteile des Halterungsaufbaues auf dessen erstem, zylindrischen Halteteil sowohl axial verschoben als auch um diesen verschwenkt und festgestellt werden. Die Feldblenden ermöglichen eine nahezu vignetierungsfreie und damit verbesserte Bildübertragung. Weiterhin kann die einstellbar ausgebildete stereooptische Einrichtung sehr kompakt gebaut werden, so daß das erfindungsgemäße Stereoendoskop einen gegenüber dem natürlichen Augenabstand wesentlich verkleinerten Augenabstand aufweisen kann, wodurch z. B. Aufnahmekameras, auch in Verbindung mit Dokumentationseinheiten, an das Endoskop angeschlossen werden können. Für den natürlichen Einblick in das Endoskop kann ein entsprechender Aufsatz angeschlossen werden, mit dem der proximale Augenabstand des Endoskopes auf den natürlichen Augenabstand des Benutzers in bekannter Weise einstellbar ist.

Die Erfindung ist nachstehend anhand eines in den anliegenden Zeichnungen dargestellten Ausführungsbeispieles näher erläutert.
Es zeigen:
- Fig. 1: eine Seitenansicht auf das Ausführungsbeispiel,
- Fig. 2: in vergrößertem Maßstab eine schematische Darstellung der optischen Einheiten des Ausführungsbeispieles,
- Fig. 3 + 4: Zubehöreinrichtungen für das Ausführungsbeispiel nach den Figuren 1 und 2 in Seitenansicht,
- Fig. 5: in vergrößertem Maßstab im wesentlichen einen Axialschnitt durch den proximalen Endabschnitt des Ausführungsbeispieles,
- Fig. 6: einen Halterungsaufbau nach der Linie VI-VI in Fig. 5.

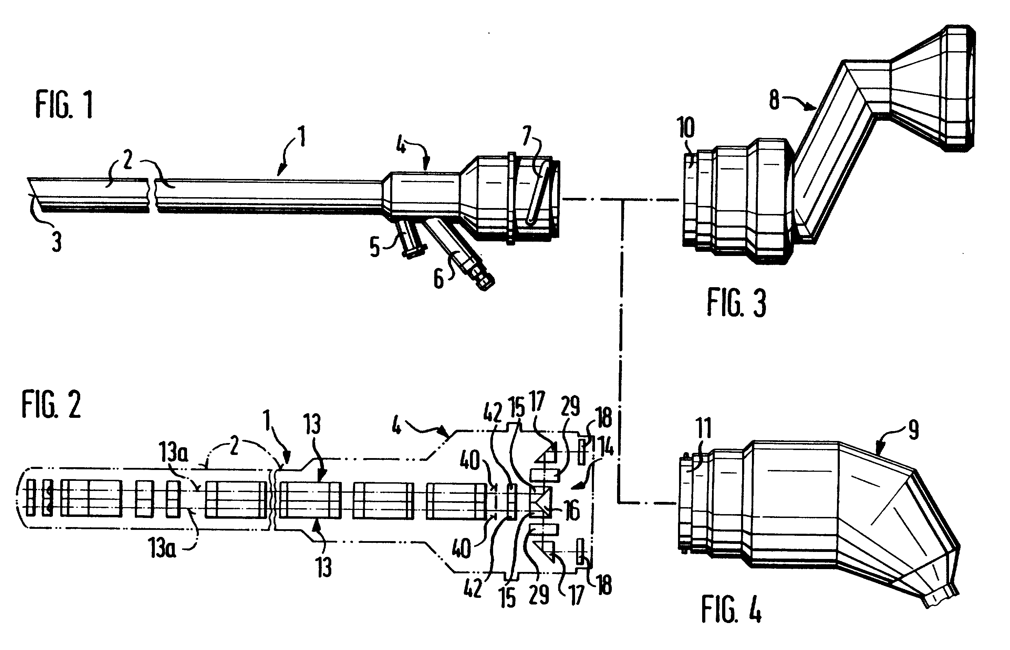

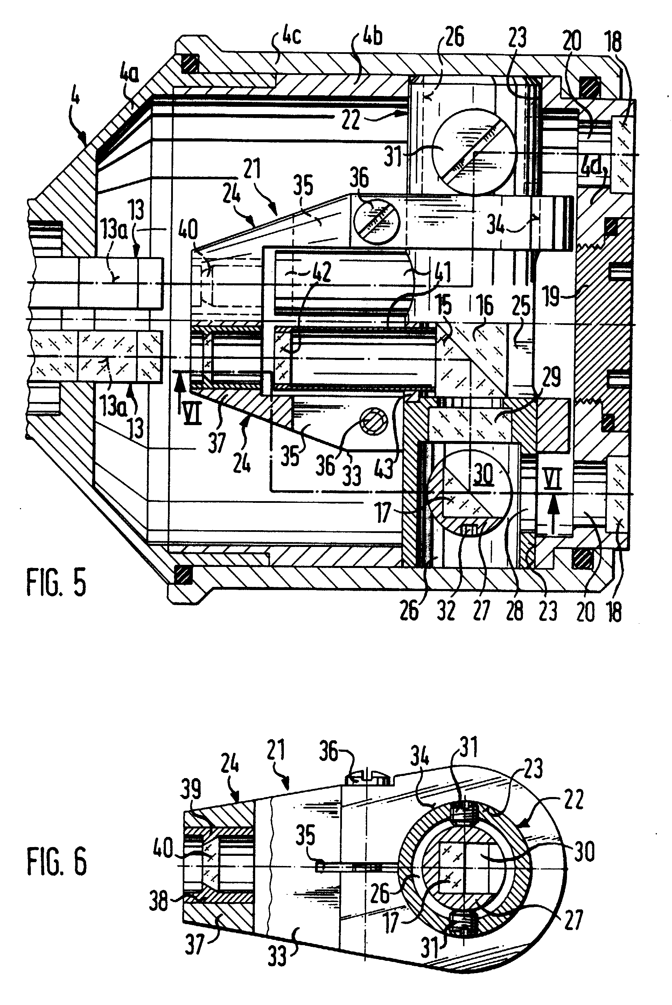

Das in Fig. 1 allgemein mit 1 bezeichnete Stereo-Endoskop weist einen längeren Schaft 2 mit distalem Ausblickfenster 3 und proximalseitig ein im Durchmesser erweitertes Gehäuse 4 mit einem Schlauchanschluß 5, einem Lichtleitkabelanschluß 6 und mit einer Kupplungsausbildung 7 auf. Gemäß den Figuren 3 und 4 kann an das Gehäuse 4 des Endoskopes 1 ein Okularaufsatz 8 oder eine Stereo-Endokamera 9 mittels der entsprechenden Kupplungseinrichtungen 10 und 11 angeschlossen werden. Die Endokamera 9 kann in bekannter Weise mit einem Monitor oder einer Dokumentationseinheit (beides nicht gezeigt) verbunden sein. Die Kupplungseinrichtungen 7, 10 und 11 können in Form von Bajonettausbildungen vorgesehen sein.

In Fig. 2 sind schematisch die optischen Einheiten gezeigt. In dem Schaft 2 befinden sich die in bekannter Weise ausgestalteten optischen Systeme 13 nahe beieinander liegend. An das proximale Ende der beiden optischen Systeme 13 schließt sich eine stereooptische Einrichtung 14 an. Diese besteht hauptsächlich aus zwei ersten Umlenkprismen 15, die an einem gemeinsamen Träger 16 befestigt sind, und aus nachgeordneten zweiten Umlenkprismen 17, die ebenfalls je an einem Trägerteil befestigt sind, wie noch erläutert ist. Einblickseitig folgen dann zwei durchsichtige Schutzelemente 18, die am Gehäuse 4 befestigt sind. Während die ersten Umlenkprismen 15 auf die optischen Achsen 13a der optischen Systeme ausgerichtet sind, bewirken die zweiten Umlenkprismen 17 in üblicher Weise wieder eine parallele Ausrichtung der umgelenkten optischen Achsen in Richtung zur Einblickseite des Endoskopes.

Aus den Figuren 5 und 6 ist die Anordnung und Befestigung der stereooptischen Einrichtung 14 in dem Gehäuse 4 deutlich zu entnehmen. Das Gehäuse 4 besteht aus einem vorderen Teil 4a, aus einem damit verbundenen, hinteren Teil 4b sowie aus einem diese beiden Teile dichtend umgebenden Verbindungsteil 4c. In der proximalen Wand 4d des hinteren Gehäuseteiles 4b ist ein zentrales Verschließteil 19 eingeschraubt. Das Verschließteil ist gegen einen Schlauchanschlußstutzen (nicht dargestellt) austauschbar. Die Wand 4d weist ferner zwei Öffnungen 20 auf, in denen die durchsichtigen Schutzelemente 18 eingesetzt sind.

In Nähe zur proximalen Wand 4d des Gehäuses 4 ist ein Halterungsaufbau 21 für die stereooptische Einrichtung 14 in dem hinteren Gehäuseteil 4b unlösbar befestigt. Dieser Aufbau besteht im wesentlichen aus einem ersten Halteteil 22, das in sich diametral gegenüberliegenden Löchern 23 des hinteren Gehäuseteiles 4b festgelegt ist, und aus zwei weiteren Halteteilen 24, die auf dem ersten Halteteil 22 schwenkbeweglich und axial verschiebbar angeordnet und auf diesem feststellbar sind, wie es die Figuren 5 und 6 zeigen.

Das erste Halteteil 22 ist im wesentlichen als hohlzylindrisches Bauteil mit einem mittigen Querdurchlaß 25 ausgebildet, der gemäß Fig. 5 auf die optischen Systeme 13 ausgerichtet ist. In dem Querdurchlaß 25 ist der Träger 16 für die ersten Umlenkprismen 15 feststehend angeordnet. Der Träger 16 besteht vorzugsweise aus einem Glasblock. In den beiden Endbereichen des hohlzylindrischen Bauteiles 22 ist jeweils eine Ausnehmung 26 in Form einer gestuft erweiterten Bohrung vorgesehen. In den beiden Bohrungen 26 ist ein weiteres und einstellbares Trägerteil 27 für die zweiten Umlenkprismen 17 justierbar angeordnet. In den Endbereichen des zweiten Halteteiles 22 sind ferner Fensterdurchbrüche 28 vorgesehen, so daß die zweiten Umlenkprismen 17 für den Blick von den proximalen, durchsichtigen Schutzelementen 18 frei sind.

Aus Fig. 5 ist ferner entnehmbar, daß zwischen den ersten Umlenkprismen 15 und den zweiten Umlenkprismen 17 jeweils eine Okularlinse 29 in dem ersten Halteteil 22 befestigt ist.

Die in den Figuren 5 und 6 gezeigten weiteren Trägerteile 27 bestehen je aus einem Kugelkörper mit einer Aussparung 30 zur Aufnahme der zweiten Umlenkprismen 17. In den Endbereichen des ersten Halteteiles 22 sind jeweils zwei sich diametral gegenüberliegende Feststellschrauben 31 vorgesehen (Fig. 6), mit denen die weiteren Trägerteile 27 festgestellt werden. Des weiteren sind die Trägerteile 27 mit Einstellmitteln 32 versehen, die vertieft ausgebildet sein können, wie Fig. 5 zeigt, aber auch vorstehend ausgebildet sein können. Mit Hilfe eines an den Einstellmitteln 32 angreifenden Werkzeuges können die Trägerteile 27 justiert werden, wobei sie nach Einstellung ihrer richtigen Position mittels der Feststellschrauben 31 festgestellt werden. Auf diese Weise sind die zweiten Umlenkprismen 17 justiert. Diese Justage wird vorgenommen, bevor das Gehäuseteil 4c montiert wird.

Die beiden weiteren Halteteile 24 des Halterungsaufbaues 21 weisen jeweils gemäß Fig. 5 eine L-förmige Gestalt auf. Der längere Schenkel 33 der L-förmigen Halteteile ist mit einer Bohrung 34 zur Aufnahme eines Längenabschnittes des ersten Halteteiles 22 und mit einem von dieser Bohrung ausgehenden Klemmschlitz 35 versehen. Im Bereich der Klemmschlitze 35 sind in den Schenkeln 33 Schrauben 36 vorgesehen, so daß die weiteren Halteteile 24 durch Anziehen der Schrauben 36 an dem ersten Halteteil 22 feststellbar sind. Die distalwärts vorgesehenen und einander zugekehrten kürzeren Schenkel 37 der weiteren Halteteiles 24 weisen je eine Bohrung 38 auf, in denen je eine axial ausrichtbare Hülse 39 eingesetzt ist. Die Hülsen 39 sind mit einer inneren Feldblende 40 versehen, wobei diese Feldblenden eine vignitierungsfreie Betrachtungsweise ermöglichen.

Man erkennt aus Fig. 5, daß die Feldblenden zwischen den optischen Systemen 13 und den ersten Umlenkprismen 15 angeordnet sind. Man erkennt aus Fig. 5 ferner, daß die weiteren Halteteile 24 je durch axiale Verschiebung auf dem ersten Halteteil 22 axial eingestellt werden können. Man erkennt des weiteren, daß die Halteteile 24 um das erste Halteteil verdreht werden können. Somit sind die beiden Feldblenden 40 mit ihrer zentralen Achse unabhängig voneinander auf die optischen Achsen 13a der optischen Systeme 13 einstellbar. Da die Verdrehbarkeit der weiteren Halteteile nur in einem sehr geringen Ausmaß bei der Justierung der Feldblenden 40 stattfindet, kann man davon sprechen, daß die diesbezügliche Einstellung der Feldblenden, d. h. senkrecht zur Zeichenebene der Fig. 5, praktisch in der gleichen Ebene stattfindet, wie die axiale Einstellung der weiteren Halteteile relativ zu den optischen Systemen 13.

Gemäß Fig. 5 sind in dem Zwischenraum zwischen den beiden längeren Schenkeln 33 der L-förmigen weiteren Halteteile 24 zwei rohrförmige Träger 41 vorgesehen, die je mit einer Feldlinse 42 ausgerüstet sind. Die Feldlinsen befinden sich somit in dem optischen Weg zwischen den Feldblenden 40 und den ersten Umlenkprismen 15 und verbessern die optischen Betrachtungsverhältnisse in dem Stereo-Endoskop 1. Die rohrförmigen Träger 41 sitzen fest in einer Fassung 43, die wiederum in dem ersten Halteteil 22 befestigt ist, und stoßen beispielsweise an den ersten Umlenkprismen 15 an. Durch axiales Verschieben der Träger 41 sind die Feldlinsen 42 unabhängig von den Feldblenden 40 relativ zu den optischen Systemen 13 einjustierbar. Nach erfolgter optischer Ausrichtung der beiden Feldlinsen 42 werden die Träger 41 in der Fassung 43 unlösbar festgelegt.

Wenn der die stereooptische Einrichtung 14 in ihrer Gesamtheit tragende Halterungsaufbau 21 in dem hinteren Gehäuseteil 4b montiert ist, ist es möglich, die Feldblenden 40 relativ zu den optischen Systemen 13 zu justieren. Hierzu ist der hülsenförmige Gehäuseteil 4c noch nicht über das Gehäuseteil 4b geschoben und noch nicht mit dem Gehäuseteil 4a verschraubt. Die somit von außen frei zugänglichen Umlenkprismen 17 und die Feldblenden 40 können kontrolliert und justiert werden. Nach erfolgter Justierung wird das Gehäuseteil 4c über das Gehäuseteil 4b geschoben und mit dem Gehäuseteil 4a verschraubt.

Um das Stereo-Endoskop auf Dichtigkeit hin zu überprüfen, kann anstelle des Verschlußteiles 19 ein Schlauchanschlußstutzen in das Gehäuseteil 4d eingeschraubt und über diesen der gesamte Innenraum des Stereo-Endoskopes an eine Überdruckquelle angeschlossen werden. Nach erfolgter Dichtigkeitsprüfung wird der Schlauchanschlußstutzen entfernt und der Innenraum mittels des Verschlußteiles 19 dicht verschlossen.

In Weiterentwicklung des erfindungsgemäßen Stereo-Endoskopes ist es möglich, die in der Bohrung 26 angeordneten Trägerteile 27 in einer weiteren, nicht dargestellten Zylinderhülse anzuordnen. Durch axiales Verstellen dieser Hülse in den Bohrungen 26 kann der Abstand der beiden zweiten Prismen 17 zueinander und damit der verkleinerte Augenabstand für eine anzuschließende Aufnahmekamera oder dergleichen sehr einfach eingestellt werden.

## Patentansprüche

1. Stereo-Endoskop mit einem Schaft (2), zwei sich durch ihn erstreckende, nahe beieinander angeordnete, optische Systeme (13) aufweist, mit einem am proximalen Schaftende vorgesehenen Gehäuse (4) mit einem inneren Halterungsaufbau (21) für eine stereooptische Einrichtung zum Stereoeinblick in die optischen Systeme, wobei die stereooptische Einrichtung in doppelter und spiegelbildlicher Anordnung je ein auf das zugehörige optische System koaxial ausgerichtetes erstes Umlenkprisma (15), ein diesem nachgeordnetes und wieder parallel zur optischen Achse des zugehörigen optischen Systemes einblickwärts ausrichtendes zweites Umlenkprisma (17) und ein einblickwärts, durchsichtiges Schutzelement (18) aufweist, dadurch gekennzeichnet, daß der Halterungsaufbau (21) aus einem sich quer zu den optischen Achsen (13a) der beiden optischen Systeme (13) des Endoskopschaftes (2) erstrekkenden ersten Halteteil (22) mit inneren Ausnehmungen (25, 26), in denen jeweils das erste Umlenkprisma (15) feststehend und das zweite Umlenkprisma (17) einstellbar angeordnet sind, und aus zwei weiteren Halteteilen (24) besteht, die an dem ersten Halteteil (22) um dessen Längsachse verdrehbar einstellbar befestigt sind und zwei feste Feldblenden (40) für die beiden optischen Systeme (13) tragen, wobei die Feldblenden (40) je zwischen ihren optischen Systemen (13) und dem ihnen zugeordneten ersten Umlenkprisma (15) vorgesehen sind.

2. Stereo-Endoskop nach Anspruch 1, dadurch gekennzeichnet, daß das erste Halteteil (22) als im wesentlichen hohlzylindrisches Bauteil mit mittigem, auf die beiden optischen Systeme (13) ausgerichtetem Querdurchlaß (25) ausgebildet ist, daß in dem Querdurchlaß ein gemeinsames, feststehendes Trägerteil (16) für die beiden ersten Umlenkprismen (15) eingesetzt ist und daß in den Ausnehmungen (26) in den mit einem einblickseitigen Fensterdurchbruch (28) versehenen Endbereichen des hohlzylindrischen Halteteiles (22) jeweils ein weiteres, einstellbares Trägerteil (27) für das zweite Umlenkprisma (17) vorgesehen ist.

3. Stereo-Endoskop nach Anspruch 2, dadurch gekennzeichnet, daß die beiden weiteren einstellbaren Trägerteile (27) je aus einem Kugelkörper mit einer Aussparung (30) zur Aufnahme des zweiten Umlenkprismas (17) bestehen.

4. Stereo-Endoskop nach Anspruch 3, dadurch gekennzeichnet, daß die beiden kugelförmigen Trägerteile (27) je mit einem formschlüssigen Einstellmittel (32) versehen und je mittels zweier, sich gegenüberliegender, in den Endbereichen des ersten Halteteiles (22) eingeschraubter Feststellschrauben (31) justierbar sind.

5. Stereo-Endoskop nach wenigstens einem der Ansprüche 1 bis 4, dadurch gekennzeichnet, daß in dem ersten Halteteil (22) des Halterungsaufbaues (21) jeweils zwischen dem ersten und dem zweiten Umlenkprisma (15, 17) eine Okularlinse (42) vorgesehen ist.

6. Stereo-Endoskop nach wenigstens einem der Ansprüche 1 bis 5, dadurch gekennzeichnet, daß die beiden weiteren Halteteile (24) des Halterungsaufbaues (21) je eine L-förmige Gestalt aufweisen, daß der längere Schenkel (33) jedes L-förmigen Halteteiles (24) mit einer Bohrung (34) zur Aufnahme je eines Längenabschnittes des ersten Halteteiles (22) und mit einem von dieser Bohrung ausgehenden, mittels Schraubenkraft veränderbaren Klemmschlitz (35) versehen ist und daß der distalwärts- vorgesehene kürzere Schenkel (37) jedes L-förmigen weiteren Halteteiles (24) eine Bohrung (39) zur Aufnahme der Feldblende (40) aufweist.

7. Stereo-Endoskop nach Anspruch 6, dadurch gekennzeichnet, daß in dem Zwischenraum zwischen den beiden Schenkeln (33) der L-förmigen weiteren Halteteile (24) zwei in axialer Richtung einstellbare, rohrförmige Träger (41) mit je einer Feldlinse (42) vorgesehen sind, wobei die Feldlinsen (42) in dem optischen Weg zwischen den Feldblenden (40) und den ersten Umlenkprismen (15) angeordnet sind, und daß die rohrförmigen Träger (41) nach ihrer Justierung an dem ersten Halteteil (22) unlösbar festlegbar sind.

8. Stereo-Endoskop nach Anspruch 2, dadurch gekennzeichnet, daß in den Endausnehmungen (26) des ersten Halteteiles (22) je eine zylindrische Traghülse axial einstellbar angeordnet ist und daß die Traghülsen die Trägerteile (27) mit den zweiten Umlenkprismen (17) aufweisen.

## Claims

1. A stereo endoscope with a shank (2) which comprises two optical systems (13) extending through it and arranged next to one another, with a housing (4) provided at the proximal shank end, with an inner holder construction (21) for a stereooptic means for the stereo viewing into the optical systems, wherein the stereooptic means in a double and mirror-imaged arrangement each comprises a first deflecting prism (15) coaxially aligned onto the associated optical system, a second deflecting prism (17) arranged after this and aligning again parallel to the optical axis of the associated optical system in the viewing direction and a transparent protective element (18) on teh viewing side, characterised in that the holder construction (21) consists of a first holding part (22) extending tranversely to the optical axes (13a) of the two optical systems (13) of the endoscope shank (2), with inner recesses (25, 26) in which in each case the the first deflecting prism (15) is stationarily arranged and the second deflecting prism (17) is adjustably arranged, and of two further holding parts (24) which are rotatably adjustably fastened to the first holding part (22) about its longitudinal axis and which carry two rigid field apertures (40) for the two optical systems (13), wherein the field apertures (40) are each provided between their optical systems (13) and the first deflecting prism (15) allocated to it.

2. A stereo endoscope according to claim 1, characterised in that the first holding part (22) is formed as an essentially hollow cylindrical component with a central transverse passage (25) aligned onto both optical systems (13), that in the transverse passage there is placed a common stationary carrieer part (16) for the two first deflecting prisms (15) and that in the recesses (26), in the end regions of the hollow cylindrical holding part (22), which are provided with a window passage (28) on the viewing side, in each case a further adjustable carrier part (27) for the second deflecting prism (17) is provided.

3. A stereo endoscope according to claim 2, characterised in that the two further adjustable carrier parts (27) each consist of a ball body with a relief (30) for receiving the second deflecting prism (17).

4. A stereo endoscope according to claim 3, characterised in that the two ball-shaped carrier parts (27) are each provided with a positive fit adjusting means (32) and are each adjustable by way of two opposite adjusting screws (31) screwed into the end regions of the first holding part (22).

5. A stereo endoscope according to at least one of the claims 1 to 4, characterised in that in the first holding part (22) of the holder construction (21) in each case between the first and the second deflecting prism (15, 17) there is provided an ocular lens (42).

6. A stereo endoscope according to at least one of the claims 1 to 5, characterised in that the two further holding parts (24) of the holder construction (21) each have an L-shaped form, that the longer arm (33) of each L-shaped holding part (24) is provided with a bore (34) for each receiving a longitudinal section of the first holding part (22) and with a clamping slot (35) proceeding from this bore and changeable by way of screw force, and that the distally provided shorter arm (37) of each L-shaped further holding part (24) comprises a bore (39) for receiving the field aperture (40).

7. A stereo endoscope according to claim 6, characterised in that in the intermediate space between the two arms (33) of the L-shaped further holding part (24) there are provided two tubular carriers (41) ajustable in the axial direction, each with a field lens (42), wherein the field lenses (42) are arranged in the optical path between the field apertures (40) and the first deflecting prisms (15), and that the tubular carriers (41) after their adjustment are unreleasaby fastenable to the first holding part (22).

8. A stereo endoscope according to claim 2, characterised in that in the end recesses (26) of the first holding part (22) there is each axially adjustably arranged a cylindrical carrier sleeve and that the carrier sleeves comprise the carrier parts (27) with the second deflecting prisms (17).

## Revendications

1. Endoscope stéréoscopique comportant une tige (2), qui comprend deux systèmes optiques (13), qui s'étendent à l'intérieur de la tige et sont disposés côte-à-côte, et comportant un boîtier (4) prévu sur l'extrémité proximale de la tige et comportant une structure interne de retenue (21) pour un dispositif optique stéréoscopique pour l'observation stéréoscopique dans les systèmes optiques, et dans lequel le dispositif optique stéréoscopique comporte, selon une disposition double et symétrique, respectivement un premier prisme de renvoi (15), qui est aligné coaxialement sur le système optique associé, un second prisme de renvoi (17), qui est disposé en aval du premier prisme de renvoi et oriente l'observation à nouveau parallèlement à l'axe optique du système optique associé, et un élément de protection transparent (18) placé sur le côté observation, caractérisé en ce que la structure de retenue (21) est constituée par une première partie de retenue (22), qui s'étend transversalement par rapport aux axes optiques (13a) des deux systèmes optiques (13) de la tige d'endoscope (2) et comporte des évidements internes (25, 26), dans lesquels respectivement le premier prisme de renvoi (15) est monté fixe et le second prisme de renvoi (17) est monté de manière à étre réglable, et par deux autres parties de retenue (24), qui sont fixées sur la première partie de retenue (22) de manière à être réglables avec possibilité de rotation autour de l'axe longitudinal de celle-ci et portent deux diaphragmes de champ fixes (40) pour les deux systèmes optiques (13), les diaphragmes de champ (40) étant prévus respectivement entre leurs systèmes optiques (13) et le premier prisme de renvoi (15), qui leur est associé.

2. Endoscope stéréoscopique selon la revendication 1, caractérisé en ce que la première partie de retenue (22) est agencée sous la forme d'un composant essentiellement cylindrique creux comportant un passage transversal médian (25) orienté sur les deux systèmes optiques (13), qu'une partie de support fixe commune (16) pour les deux premiers prismes de renvoi (15) est insérée dans le passage transversal et que dans les évidements (26) formés dans les parties d'extrémité, pourvues d'un passage en forme de fenêtre (28) situé du côté observation, de la partie de retenue en forme de cylindre creux (29) est prévue respectivement une autre partie de support réglable (27) pour le second prisme de renvoi (17).

3. Endoscope stéréoscopique selon la revendication 2, caractérisé en ce que les deux autres parties de support réglables (27) sont constituées chacune par un corps sphérique possédant un évidement (30) servant à loger le second prisme de renvoi (17).

4. Endoscope stéréoscopique selon la revendication 3, caractérisé en ce que les deux parties de support de forme sphérique (27) sont pourvues chacune d'un moyen de réglage mécanique (32) et peuvent être ajustées respectivement au moyen de deux vis de serrage (31), qui sont situées en vis-à-vis et sont vissées dans les zones d'extrémité de la première partie de retenue (22).

5. Endoscope stéréoscopique selon au moins l'une des revendications 1 à 4, caractérisé en ce qu'une lentille d'oculaire (42) est prévue dans la première partie de retenue (22) de la structure de retenue (21) respectivement entre les premier et second prismes de renvoi (15, 17).

6. Endoscope stéréoscopique selon au moins l'une des revendications 1 à 5, caractérisé en ce que les deux autres parties de retenue (24) de la structure de retenue (21) possèdent chacune une configuration en forme de L, que la branche la plus longue (33) de chaque partie de retenue en forme de L (24) est pourvue d'un perçage (34) servant à loger respectivement un tronçon longitudinal de la première partie de retenue (22), et est pourvue d'une fente de serrage (35) qui s'étend à partir de ce perçage et peut être modifié au moyen de la force d'une vis, et que la branche plus courte (37), prévue sur le côté distal, de chaque autre partie de retenue en forme de L (24) comporte un perçage (39) servant à loger le diaphragme de champ (40).

7. Endoscope stéréoscopique selon la revendication 6, caractérisé en ce que dans l'espace intercalaire présent entre les deux branches (33) des autres parties de retenue en forme de L (24) sont prévus deux supports tubulaires (41) qui sont réglables dans la direction axiale et comportent chacune une lentille de champ (42), les lentilles de champ (42) étant disposées dans le trajet optique entre les diaphragmes de champ (40) et les premiers prismes de renvoi (15), les supports de forme tubulaire (41) pouvant être fixés de façon inamovible, après leur ajustement, sur la première partie de retenue (22).

8. Endoscope stéréoscopique selon la revendication 2, caractérisé en ce qu'une douille de support cylindrique respective est disposée de manière à être réglable axialement dans les évidements d'extrémité (26) de la première partie de retenue (22) et que les douilles de support comportent les parties de support (27) équipées des seconds prismes de renvoi (17).
